# EUROPEAN PATENT SPECIFICATION

(11) **EP 2 050 986 B1**
(45) Date of publication and mention of the grant of the patent: **11.04.2012**
(21) Application number: 07791679.9
(22) Date of filing: 31.07.2007
(51) Int. Cl.: F16H 61/02

(54) **VEHICLE CONTROL DEVICE**
FAHRZEUGSTEUERVORRICHTUNG
DISPOSITIF DE COMMANDE DE VÉHICULE

(30) Priority: 04.08.2006 JP 2006213044
(43) Date of publication of application: 22.04.2009
(73) Proprietor: Toyota Jidosha Kabushiki Kaisha, Toyota-shi Aichi 471-8571 (JP)
(72) Inventor: MIYANOO, Yuji c/o TOYOTA JIDOSHA KABUSHIKI KAISHA, Toyota-shi Aichi 471-8571 (JP)
(74) Representative: Kuhnen & Wacker
(86) International application number: PCT/JP2007/064995
(87) International publication number: WO 2008/016052

(56) References cited:
- EP-A2- 1 061 239
- EP-A2- 1 232 895
- EP-A2- 1 406 032
- WO-A1-03/010023
- JP-A- 05 263 671
- JP-A- 2001 330 118
- JP-A- 2003 129 875
- JP-A- 2003 294 124
- JP-A- 2003 294 124
- JP-A- 2004 245 192
- JP-A- 2005 048 782
- US-A1- 2002 019 291

## Description

### TECHNICAL FIELD

The present invention relates to a vehicle comprising a vehicle control device, said vehicle including an engine-driven oil pump that is driven by the rotation of an output shaft of an engine, a hydraulic actuator that operates based on pressure of hydraulic oil supplied from the oil pump, and a continuously variable transmission capable of continuously varying the transmission gear ratio.

### BACKGROUND ART

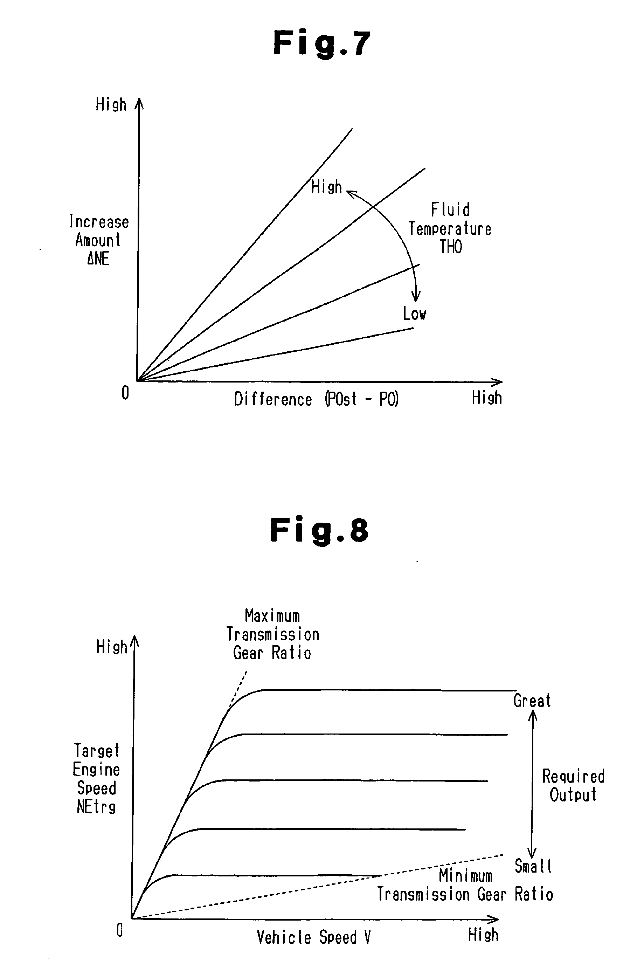

Conventionally, as described in Japanese Laid-Open Patent Publication No. JP 2003-129875 A, for example, a continuously variable transmission capable of varying the transmission gear ratio continuously (in a stepless manner) in correspondence with the operating state of a vehicle has been proposed as a transmission for a vehicle. The continuously variable transmission performs transmission control with reference to a transmission diagram illustrated in Fig. 8. Specifically, a target engine speed NEtrg is set based on a required engine output such as the accelerator opening degree and the vehicle speed V. The transmission gear ratio is then continuously varied in such a manner that the actual engine speed becomes the target engine speed NEtrg. Typically, the target engine speed NEtrg, which is determined using the aforementioned transmission diagram, is set to a minimum value of an engine speed range that produces an output corresponding to the required engine output, or, in other words, an engine speed that minimizes the fuel consumption rate. Accordingly, in a vehicle employing the continuously variable transmission, unnecessary increase of the engine speed is maximally suppressed to save fuel consumption, while acceleration performance corresponding to the required engine output is maintained.

In recent cases, vehicles often include a variable valve timing apparatus that varies valve timing of intake valves and exhaust valves. The variable valve timing apparatus receives hydraulic oil from an engine-driven oil pump, which is driven by the rotation of the output shaft of the engine. The variable valve timing apparatus thus operates based on the hydraulic pressure supply of the hydraulic oil. In this manner, the variable valve timing apparatus changes the valve timing of the intake valves and the exhaust valves to suitable values corresponding to the operating state of the engine. This improves the engine output and saves fuel consumption.

However, if a vehicle employs a hydraulic actuator such as the variable valve timing apparatus, which is actuated by pressure generated by hydraulic oil supplied from an engine-driven oil pump, in combination with the above-described continuously variable transmission, the vehicle may have the following problem.

Specifically, in the vehicle using the continuously variable transmission, the engine speed is maintained as a value close to the target engine speed that ensures an optimal fuel consumption rate, and thus the engine is repeatedly operated in a low speed range. As a result, if, for example, the hydraulic oil deteriorates as time elapses and thus the viscosity of the hydraulic oil decreases, increasing leakage of the hydraulic oil from sections to which the hydraulic oil is supplied, prolonged operation of the engine in a low-load operating state may lower the hydraulic pressure supply of the hydraulic oil in the actuator to a value less than the hydraulic pressure necessary for properly operating the actuator. Such insufficiency of the hydraulic pressure supply may hamper optimal operation of the actuator, or degrade operating response of the actuator or substantially disable the actuator.

US 2002/019291 A1 discloses a vehicle according to the preamble of claim 1. The vehicle comprises a vehicle control device, a continuously variable transmission, an engine-driven oil pump driven by rotation of an output shaft of an engine and a variable valve actuation apparatus that changes valve actuation of an intake valve or an exhaust valve. The vehicle control device sets the transmission gear ratio of the continuously variable transmission based on the operating state of a vehicle. Further, the control device changes the engine speed in such a manner that the rotational speed of the output shaft of the engine is increased when the pressure of the hydraulic oil provided from the oil pump to the variable valve actuation apparatus is below a prescribed value.

### DISCLOSURE OF THE INVENTION

Accordingly, it is an objective of the present invention to provide a vehicle control device in a vehicle having a hydraulic actuator, which operates based on pressure (hydraulic pressure supply) of hydraulic oil supplied from an engine-driven oil pump, and a continuously variable transmission, which continuously varies the transmission gear ratio. More specifically, an objective of the present invention is to provide a vehicle control device that is capable of compensating for insufficiency of hydraulic pressure supply in the hydraulic actuator and of properly operating the actuator.

To achieve the foregoing objective and in accordance with one aspect of the present invention, a vehicle comprising a vehicle control device, said vehicle having an engine-driven oil pump driven by rotation of an output shaft of an engine, a hydraulic actuator that operates based on the pressure of a hydraulic oil provided by the oil pump, and a continuously variable transmission capable of continuously varying a transmission gear ratio is provided. The vehicle control device sets the transmission gear ratio of the continuously variable transmission based on the operating state of a vehicle. The vehicle control device includes transmission gear ratio changing means that changes the transmission gear ratio in such a manner that the rotational speed of the output shaft of the engine is increased when the pressure of the hydraulic oil provided from the oil pump to the actuator is less than a reference hydraulic pressure. The actuator is a variable valve actuation apparatus that changes valve actuation of at least one of an intake valve and an exhaust valve of an internal combustion engine to target actuation that is set based on the engine operating state. The transmission gear ratio changing means changes the transmission gear ratio in such a manner that the lower the pressure of the hydraulic oil provided to the actuator, the greater the increase in the amount of the rotational speed of the output shaft of the engine and the transmission gear ratio changing means detects the temperature of the hydraulic oil or a correlation value of the temperature of the hydraulic oil and changes the transmission gear ratio based on the result of the detection in such a manner that the higher the temperature of the hydraulic oil, the greater the increase in the amount of the rotational speed of the output shaft of the engine.

### BRIEF DESCRIPTION OF THE DRAWINGS

Fig. 1 is a diagram schematically illustrating the configurations of an internal combustion engine, or a control object of a vehicle control device according to one embodiment of the present invention, a continuously variable transmission, and a vehicle including an engine and transmission;
Fig. 2 is a flowchart representing a transmission control procedure;
Fig. 3 is a transmission diagram with reference to which transmission control is carried out;
Fig. 4 is a flowchart representing an increase amount setting procedure;
Fig. 5 is a graph representing the relationship of integrated value of the intake air amount and the engine coolant temperature with the oil temperature;
Fig. 6 is a graph representing the relationship of engine speed and the oil temperature with the hydraulic pressure;
Fig. 7 is a graph representing the relationship of the insufficiency level of the hydraulic pressure and the oil temperature with the increase amount of the target engine speed; and
Fig. 8 is a transmission diagram with reference to which a typical continuously variable transmission performs transmission control.

### BEST MODE FOR CARRYING OUT THE INVENTION

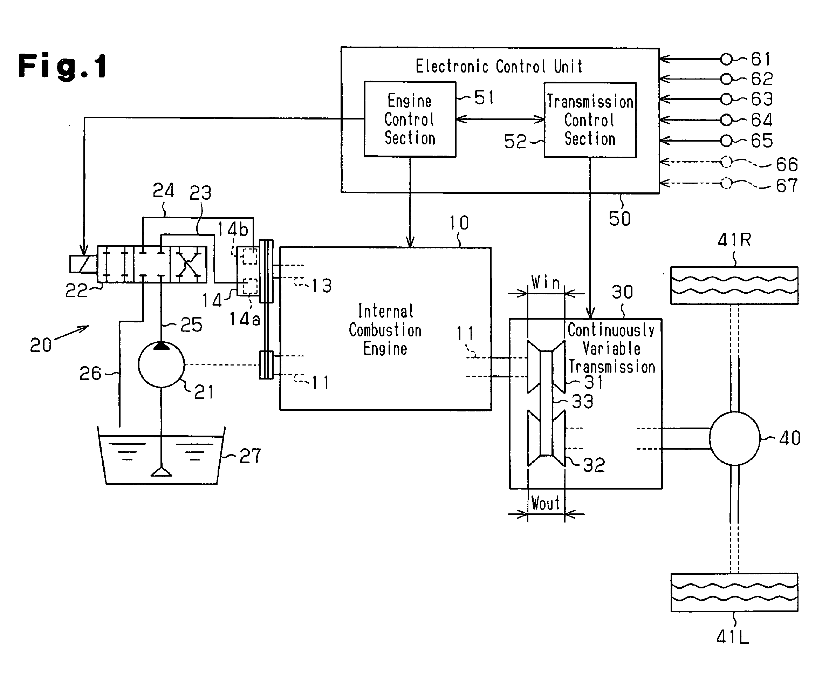

One embodiment of the present invention, or a vehicle control device, will now be described with reference to Figs. 1 to 7. Fig. 1 is a diagram schematically illustrating the configuration of an internal combustion engine, or a controlled object of the vehicle control device of the present embodiment, a continuously variable transmission, and a vehicle having the engine and the continuously variable transmission.

A variable valve timing apparatus 14 that varies the valve timing of intake valves (not shown) of an internal combustion engine 10 is arranged at an end of a camshaft 13 at the intake side, which selectively opens and closes the intake valves. Similarly, a variable valve timing apparatus 14 that varies the valve timing of exhaust valves is arranged at an end of a camshaft 13 at the exhaust side, which selectively opens and closes the exhaust valves. In Fig. 1, only the variable valve timing apparatus 14 provided on the camshaft 13 at the intake side is illustrated. The variable valve timing apparatus 14 operates based on hydraulic pressure of hydraulic oil supplied from a hydraulic device 20. The hydraulic device 20 is connected to an output shaft 11 of the engine 10 so that the drive force of the engine 10 is transmitted to the hydraulic device 20. The hydraulic device 20 includes an engine-driven oil pump 21, which is driven by the rotation of the output shaft 11, and an oil path switch valve 22.

With reference to Fig. 1, a timing advancing oil passage 23 and a timing retarding oil passage 24 are connected to a timing advancing oil chamber 14a and a timing retarding oil chamber 14b, respectively, in the variable valve timing apparatus 14. The timing advancing oil passage 23 and the timing retarding oil passage 24 are connected to an oil supply passage 25 and an oil discharge passage 26, respectively, through the oil path switch valve 22. The oil pump 21 is arranged in the oil supply passage 25. The hydraulic oil is pumped up from an oil pan 27 and supplied selectively to the oil chamber 14a and the oil chamber 14b through the oil supply passage 25. The oil discharge passage 26 is connected to the oil pan 27. The hydraulic oil discharged from the oil chambers 14a, 14b through the oil discharge passage 26 is thus returned to the oil pan 27. Some of the hydraulic oil sent from the oil pump 21 is supplied to different parts of the engine through non-illustrated lubricant oil lines as lubricant oil. The hydraulic oil thus lubricates the corresponding parts and then returns to the oil pan 27.

The oil path switch valve 22 is provided in each of the variable valve timing apparatuses 14, which are provided on the camshaft 13 at the intake side and the camshaft 13 at the exhaust side. Each of the oil path switch valves 22 switches the corresponding one of the oil paths selectively among a state in which the oil supply passage 25 communicates with the timing advancing oil passage 23 and the oil discharge passage 26 communicates with the timing retarding oil passage 24, a state in which the timing advancing oil passage 23 and the timing retarding oil passage 24 are both disconnected from the oil supply passage 25 and the oil discharge passage 26, and a state in which the oil supply passage 25 communicates with the timing retarding oil passage 24 and the oil discharge passage 26 communicates with the timing advancing oil passage 23.

If the oil path switch valve 22 switches the oil path to the state in which the oil supply passage 25 communicates with the timing advancing oil passage 23 and the timing retarding oil passage 24 communicates with the oil discharge passage 26, the hydraulic oil pumped up by the oil pump 21 is supplied to the timing advancing oil chamber 14a via the oil supply passage 25 and the timing advancing oil passage 23. Meanwhile, the hydraulic oil in the timing retarding oil chamber 14b is discharged into the oil pan 27 through the timing retarding oil passage 24 and the oil discharge passage 26. As the amount of the hydraulic oil in the timing advancing oil chamber 14a increases in this manner, the corresponding camshaft 13 relatively rotates in a direction in which the valve timing is advanced.

If the oil path switch valve 22 switches the oil path to the state in which the oil supply passage 25 communicates with the timing retarding oil passage 24 and the timing advancing oil passage 23 communicates with the oil discharge passage 26, the hydraulic oil pumped up by the oil pump 21 is supplied to the timing retarding oil chamber 14b via the oil supply passage 25 and the timing retarding oil passage 24.
Meanwhile, the hydraulic oil in the timing advancing oil chamber 14a is discharged into the oil pan 27 through the timing advancing oil passage 23 and the oil discharge passage 26. As the amount of the hydraulic oil in the timing retarding oil chamber 14b increases in this manner, the camshaft 13 relatively rotates in a direction in which the valve timing is retarded.

As illustrated in Fig. 1, if the oil path switch valve 22 switches the oil path to the state in which the timing advancing oil passage 23 and the timing retarding oil passage 24 are both disconnected from the oil supply passage 25 and the oil discharge passage 26, the hydraulic oil is neither supplied to or discharged from the oil chambers 14a, 14b. This prevents the camshaft 13 from relatively rotating and thus the valve timing is maintained.

Switching of the oil path by means of the oil path switch valve 22 is carried out by an engine control section 51 of an electronic control unit 50 based on the engine operating state. By changing the valve timing to a value suitable for the engine operating state, engine output is improved and fuel consumption is conserved.

A continuously variable transmission 30 is connected to the output shaft 11 of the engine 10. The continuously variable transmission 30 is configured by an input pulley 31, an output pulley 32, and a belt 33. The input pulley 31 and the output pulley 32 are capable of changing a groove width Win and a groove width Wout, respectively, in response to a control signal sent from a transmission control section 52 of the electronic control unit 50. The belt 33 is wound around the two pulleys 31, 32.

The input pulley 31 is connected to the output shaft 11 of the engine 10 so that the drive force of the engine 10 is transmitted from the output shaft 11 to the input pulley 31. The output pulley 32 is connected to vehicle wheels 41L, 41R through a differential gear 40 so that the drive force of the engine 10 is transmitted from the output pulley 32 to the vehicle wheels 41L, 41R. As a result, the drive force transmitted from the input pulley 31 to the output pulley 32 through the belt 33 is transmitted to the vehicle wheels 41L, 41R through the differential gear 40.

The continuously variable transmission 30 changes the groove widths Win, Wout of the corresponding pulleys 31, 32 in response to the control signal from the transmission control section 52. This causes the continuously variable transmission 30 to alter the winding radius of the belt 33, thus continuously varying the transmission gear ratio.

The electronic control unit 50 receives detection signals from, for example, an accelerator opening degree sensor 61, a vehicle speed sensor 62, an engine speed sensor 63, an air flowmeter 64, and a coolant temperature sensor 65, which serve as sensors that detect the operating state of the vehicle.
The accelerator opening degree sensor 61 detects the accelerator opening degree θac, which corresponds to the depression amount of the accelerator pedal. The vehicle speed sensor 62 detects the vehicle speed V and the engine speed sensor 63 detects the engine speed NE. The air flowmeter 64 detects the intake air amount GA and the coolant temperature sensor 65 detects the engine coolant temperature THW. Based on the detection signals from the sensors 61 to 65, the electronic control unit 50 controls the engine operating state and regulates the transmission gear ratio of the continuously variable transmission 30.

Specifically, the level of the output required by the driver is estimated based on the accelerator opening degree θac. The engine 10 is then controlled through the engine control section 51 in such a manner that the engine output corresponding to the required output is achieved. Meanwhile, the target engine speed NEtrg is set in such a manner as to achieve the optimal fuel consumption rate and the transmission gear ratio is continuously varied in such a manner that the engine speed NE becomes the target engine speed NEtrg. Through such transmission control, acceleration performance corresponding to the required engine output is maintained and unnecessary increase of the engine speed is maximally suppressed so as to save fuel consumption.

Since the vehicle of the present embodiment has the continuously variable transmission 30, the engine speed NE is maintained at a value close to the target engine speed NEtrg, which ensures the optimal fuel consumption rate. In other words, the engine is repeatedly operated in a low speed range. As a result, if, for example, the hydraulic oil deteriorates as the time elapses and thus the viscosity of the hydraulic oil decreases, increasing the amount of the hydraulic oil leaked from a part to which the hydraulic oil is supplied, prolonged operation of the engine in a low-load operating state may lower the hydraulic pressure supply in the variable valve timing apparatus 14 to a value less than the hydraulic pressure necessary for properly operating the variable valve timing apparatus 14. Such insufficiency of the hydraulic pressure supply may disadvantageously hamper optimal operation of the variable valve timing apparatus 14, or decrease the operating response of the variable valve timing apparatus 14 or substantially disable the variable valve timing apparatus 14.

Specifically, if the hydraulic pressure supply falls short in the variable valve timing apparatus 14, a delay is caused in adjustment of the valve timing. This makes it impossible to regulate the valve timing in correspondence with the vehicle operating state, thus preventing fuel consumption from being conserved and the engine output and the exhaust properties from being improved. Further, if the valve timing cannot be maintained constant and varies unnecessarily, the intake air amount GA of the engine 10 becomes unstable, which may increase the fuel consumption or deteriorate the engine output or the exhaust properties.

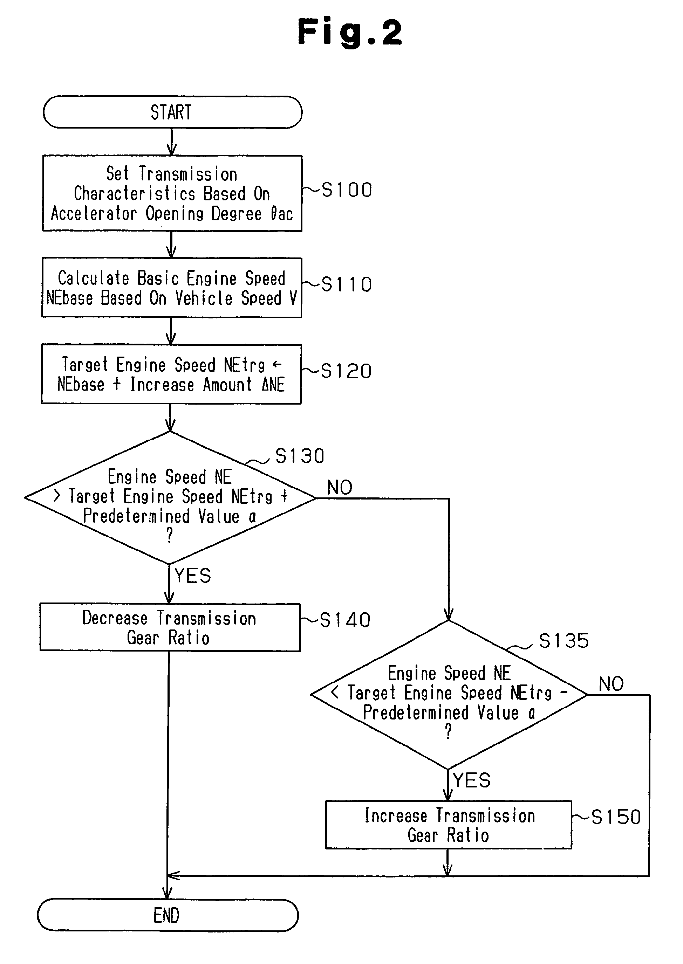

In the present embodiment, to solve this problem, the insufficiency of the hydraulic pressure supply is estimated and the transmission gear ratio is decreased to increase the engine speed NE, thus compensating for the insufficient hydraulic pressure supply. Such transmission control will hereafter be explained in the following with reference to Figs. 2 to 7. Fig. 2 is a flowchart representing a series of procedure performed in the transmission control.

The procedure is repeatedly carried out by the transmission control section 52 of the electronic control unit 50 when the shift lever is manipulated by the driver, or, specifically, when the shift lever is shifted from the park P to the drive D to enable transmission of the drive force from the engine 10 to the continuously variable transmission 30, thus allowing the vehicle to proceed.

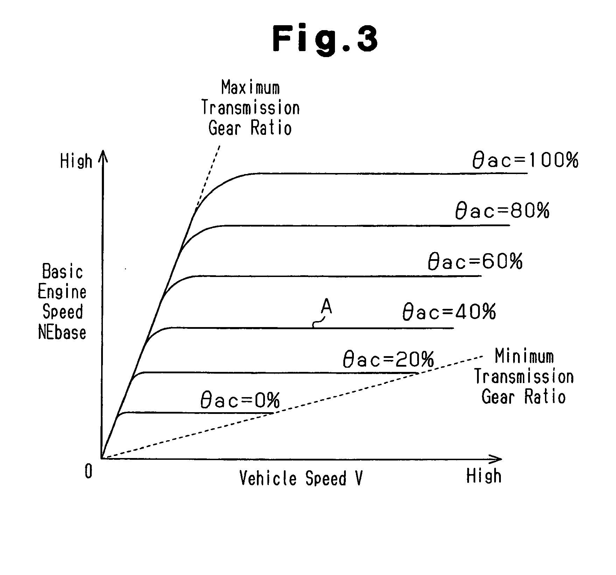

Once the procedure is started, in step S100, transmission characteristics are set based on the accelerator opening degree θac corresponding to the level of the output required by the driver. Specifically, with reference to the transmission diagram illustrated in Fig. 3, a transmission curve corresponding to the accelerator opening degree θac is selected. For example, if the accelerator opening degree θac is 40%, the transmission curve A is selected.

The basic engine speed NEbase in the transmission diagram of Fig. 3 is set in advance based on the minimum value of the engine speed that ensures an engine output corresponding to the accelerator opening degree θac, or the engine speed that ensures the optimal fuel consumption rate. In the transmission control, the basic engine speed NEbase is determined in correspondence with the vehicle speed V in accordance with the transmission curve.

After the transmission characteristics are set and the transmission curve corresponding to the accelerator opening degree θac is selected in step S100, step S110 of the procedure is performed. Specifically, in accordance with the transmission curve selected in step S100, the basic engine speed NEbase based on the vehicle speed V is calculated. Step S120 is then carried out.

In step S120, an increase amount ΔNE, which will be explained below, is added to the basic engine speed NEbase. The sum (NEbase + ΔNE) is set as the target engine speed NEtrg. Setting of the target engine speed NEtrg is followed by step S130, in which it is determined whether the engine speed NE is higher than the target engine speed NEtrg. In the determination, the sum of the target engine speed NEtrg and a predetermined value α is used as a threshold value. That is, if the engine speed NE is higher than the target engine speed NEtrg by a margin greater than or equal to the value α, it is determined that the engine speed NE is higher than the target engine value NEtrg. The value α is set in advance, based on the results of experiments, to a value in a range in which the difference between the engine speed NE and the target engine speed NEtrg is acceptable.

If it is determined that the engine speed NE is higher than the target engine speed NEtrg in step S130 (step S130: YES), step S140 of the procedure is performed and the transmission gear ratio is decreased. Specifically, the groove width Win of the input pulley 31 of the continuously variable transmission 30 is increased and the groove width Wout of the output pulley 32 is reduced so that the transmission gear ratio is decreased. Then, the procedure is suspended.

Contrastingly, if it is determined that the engine speed NE is less than or equal to the target engine speed NEtrg in step S130 (step S130: NO), step S135 of the procedure is performed. In step S135, it is determined whether the engine speed NE is lower than the target engine speed NEtrg. In the determination, the value obtained by subtracting the predetermined value α from the target engine speed NEtrg is used as a threshold value. Specifically, if the engine speed NE is lower than the target engine speed NEtrg by a margin greater than or equal to the value α, it is determined that the engine speed NE is lower than the target engine speed NEtrg.

If it is determined that the engine speed NE is lower than the target engine speed NEtrg in step S135 (step S135: YES), step S150 of the procedure is performed and the transmission gear ratio is increased. Specifically, the groove width Win of the input pulley 31 of the continuously variable transmission 30 is reduced and the groove width Wout of the output pulley 32 is increased so that the transmission gear ratio is increased. Afterwards, the procedure is suspended.

If determination that the engine speed NE is higher than the target engine speed NEtrg is not made in step S130 (step S130: NO) and determination that the engine speed NE is higher than the target engine speed NEtrg is not made in step S135 (step S135: NO), it is determined that the engine speed NE is equal to the target engine speed NEtrg. The transmission gear ratio is thus maintained at the current value and the procedure is suspended.

By repeating the procedure, the transmission control section 52 sets the target engine speed NEtrg based on the accelerator opening degree θac corresponding to the level of the required output and controls the transmission gear ratio in such a manner that the engine speed NE becomes equal to the target engine speed NEtrg.

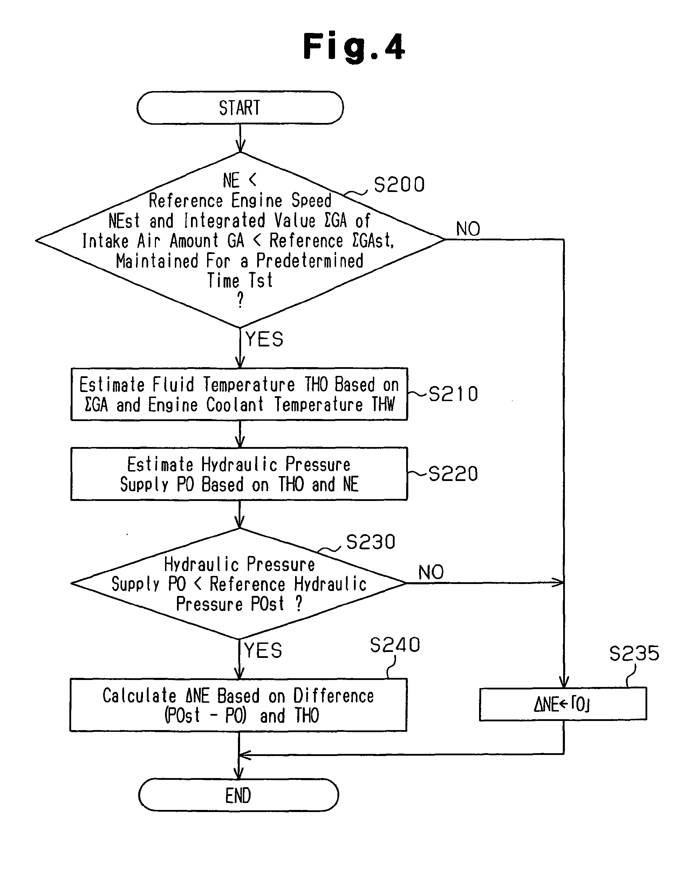

Next, with reference to Fig. 4, an increase amount setting procedure for setting the increase amount ΔNE, which is added to the basic engine speed NEbase, will be described. Fig. 4 is a flowchart representing the increase amount setting procedure. The procedure is repeatedly performed by the transmission control section 52, concurrently with the above-described transmission control.

First, in step S200, it is determined whether a state has continued for or longer than a predetermined time Tst, in which state the engine speed NE is less than the reference engine speed NEst and the integrated value ΣGAs of the intake air amount GA in the latest period of a predetermined length immediately before the determination in step S200 is less than the reference value ΣGAst. In other words, through such determination, it is determined whether the engine operating state has been maintained in a low load operating state for a prolonged duration and thus the hydraulic pressure supply in the variable valve timing apparatus 14 tends to become insufficient.

If it is determined that the engine operating state does not correspond to a state in which the hydraulic pressure supply tends to become insufficient (step S200: NO), step S235 of the procedure is carried out and the increase amount ΔNE is set to 0. The procedure is then suspended. That is, if, in step S200, it is determined that the engine operating state does not correspond to the state in which the hydraulic pressure supply in the variable valve timing apparatus 14 tends to become insufficient, the basic engine speed NEbase is set as the target engine speed NEtrg. Then, normal transmission control is performed to optimize the fuel consumption rate.

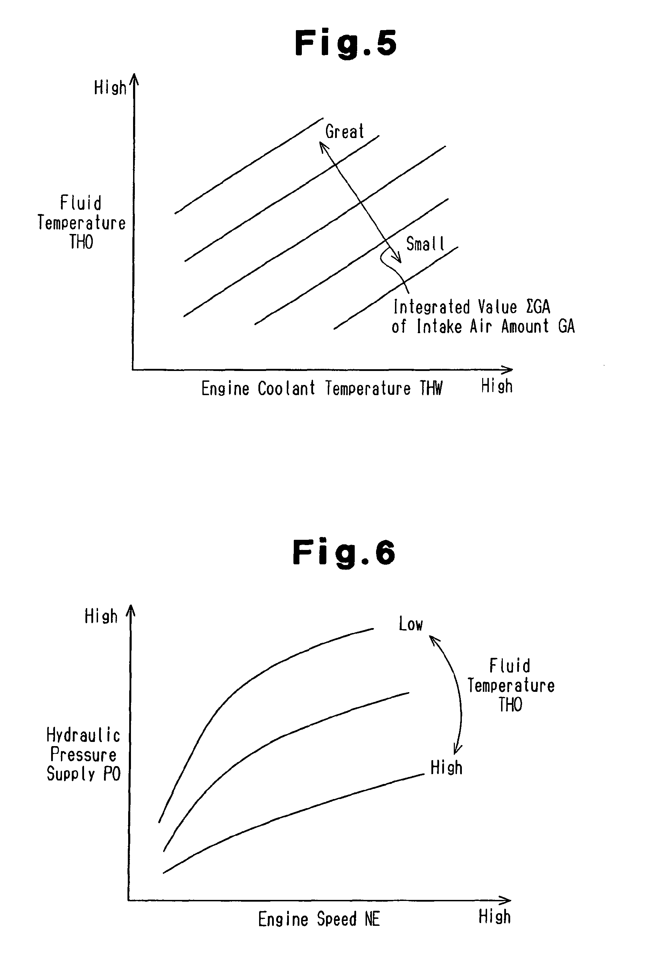

If it is determined that the engine operating state corresponds to the state in which the hydraulic pressure supply tends to become insufficient in step S200 (step S200: YES), step S210 of the procedure is carried out. In step S210, the oil temperature THO is estimated from the integrated value ΣGA of the intake air amount GA and the engine coolant temperature THW. Specifically, the oil temperature THO is estimated with reference to a map for calculation that has been stored in advance by a memory of the electronic control unit 50. As illustrated in Fig. 5, the map is set in advance based on results of experiments such that the higher the engine coolant temperature THW and the greater the integrated value ΣGA of the intake air amount GA, the greater the value of the oil temperature THO becomes.

After the oil temperature THO is estimated in step S210, step S220 of the procedure is performed and the hydraulic pressure supply PO in the variable valve timing apparatus 14 is estimated based on the oil temperature THO and the engine speed NE. Specifically, the hydraulic pressure supply PO is estimated with reference to a map for calculation that has been stored in advance by the memory of the electronic control unit 50. As illustrated in Fig. 6, the map is set in advance based on results of experiments such that the higher the engine speed NE and the higher the oil temperature THO, the greater the value of the hydraulic pressure supply PO becomes.

The estimation of the hydraulic pressure supply PO in step S220 is followed by step S230 of the procedure in which it is determined whether the hydraulic pressure supply PO is less than the reference hydraulic pressure POst. Based on the results of experiments, the reference hydraulic pressure POst is set in advance to a value that allows determination whether the hydraulic pressure supply PO of the hydraulic oil supplied to the variable valve timing apparatus 14 satisfies the hydraulic pressure necessary for properly operating the variable valve timing apparatus 14. In other words, it is determined in step S230 whether the hydraulic pressure necessary for properly operating the variable valve timing apparatus 14 is ensured.

If it is determined in step S230 that the hydraulic pressure supply PO is greater than or equal to the reference hydraulic pressure POst (step S230: NO), step S235 of the procedure is carried out and the increase amount ΔNE is set to 0. The procedure is then suspended. In other words, if it is determined that the hydraulic pressure necessary for properly operating the variable valve timing apparatus 14 is ensured in step S230, the basic engine speed NEbase is set to the target engine speed NEtrg and the normal transmission control is performed so that the fuel consumption rate is optimized.

Contrastingly, if it is determined that the hydraulic pressure supply PO is less than the reference hydraulic pressure POst in step S230 (step S230: YES), step S240 of the procedure is performed. In step S240, the increase amount ΔNE is calculated based on the difference (POst - PO) between the reference hydraulic pressure POst and the hydraulic pressure supply PO. Specifically, the increase amount ΔNE is obtained with reference to a map for calculation that has been stored in advance by the memory of the electronic control unit 50. As shown in Fig. 7, the map is set such that the greater the difference (POst - PO) between the reference hydraulic pressure POst and the hydraulic pressure supply PO, the greater the increase amount ΔNE becomes. Further, the map is set such that, even if the difference (POst - PO) between the reference hydraulic pressure POst and the hydraulic pressure supply PO is the same, the higher the oil temperature THO, the greater the increase amount ΔNE becomes.

After the increase amount ΔNE is set in step S240, the transmission control section 52 suspends the increase setting procedure. The increase amount ΔNE is added to the basic engine speed NEbase in the above-described transmission control and thus the target engine speed NEtrg is set. As a result, if it is determined that the hydraulic pressure necessary for properly operating the variable valve timing apparatus 14 is not provided (step S230: YES), the increase amount ΔNE based on the difference (POst - PO) between the reference hydraulic pressure POst and the hydraulic pressure supply PO corresponding to insufficiency of the hydraulic pressure supply is added to the basic engine speed NEbase. The target engine speed NEtrg is thus increased. In other words, the transmission gear ratio is changed in such a manner as to increase the engine speed NE.

The present embodiment has the following advantages.
(1) If the hydraulic pressure supply PO provided from the oil pump 21 to the variable valve timing apparatus 14 is low, the transmission gear ratio of the continuously variable transmission 30 is changed in such a manner as to increase the engine speed NE. This raises the rotational speed of the output shaft 11, or the engine speed NE. As a result, the displacement of the oil pump 21 is raised to compensate for the insufficiency of the hydraulic pressure supply PO, allowing the variable valve timing apparatus 14 to properly operate.
(2) The increase amount ΔNE is determined based on the difference (POst - PO) between the reference hydraulic pressure POst and the hydraulic pressure supply PO. The engine speed NE is thus increased in correspondence with the extent of the insufficiency of the hydraulic pressure supply PO. This suppresses unnecessary increase of the engine speed NE and further effectively ensures operating performance of the variable valve timing apparatus 14.
(3) If the hydraulic pressure supply is insufficient, such insufficiency may be attributed mainly to either a low engine speed and a low oil pump displacement or an increased leakage of hydraulic oil from the actuator due to a high temperature and a low viscosity of the hydraulic oil, even if the degree of insufficiency is the same. If the insufficient hydraulic pressure supply is caused by a low engine speed, the hydraulic pressure supply is quickly raised by increasing the engine speed. In contrast, if the insufficiency results from a high temperature of the hydraulic oil, increase of the engine speed further raises the leakage of the hydraulic oil and thus the increase amount of the hydraulic pressure supply remains relatively low, despite the increased engine speed. In other words, the increase amount in the hydraulic pressure supply caused by the engine speed increase varies depending on the temperature of the hydraulic oil. In the present embodiment, the oil temperature THO is estimated, and the transmission gear ratio of the continuously variable transmission is changed in such a manner that the higher the oil temperature THO, the more the engine speed NE is increased. As a result, the engine speed NE is increased in correspondence with the leakage of the hydraulic oil, which changes depending on the oil temperature THO. Accordingly, while unnecessary increase of the engine speed NE is suppressed, the operating performance of the variable valve timing apparatus 14 is ensured further effectively.
(4) The engine coolant temperature THW has a tendency to change while showing a high correlation with the average temperature of the engine 10 as a whole. In contrast, the integrated value ΣGA of the intake air amount GA has a tendency to change while showing a high correlation solely with the local temperatures in the vicinities of the combustion chambers. In the present embodiment, the oil temperature THO is estimated with reference to both the integrated value ΣGA of the intake air amount and the engine coolant temperature THW. As a result, the oil temperature THO is estimated more accurately in a manner reflecting these tendencies.

If, for example, the hydraulic oil is used to lubricate the engine pistons reciprocating in the combustion chambers, and the temperature of the hydraulic oil changes while showing a high correlation with the temperature of each combustion chamber, the temperature of the hydraulic oil changes sensitively in accordance with the current engine combustion state. In this case, it is preferred that the oil temperature THO be estimated with reference to both the integrated value ΣGA of the intake air amount and the engine coolant temperature THW. In this manner, the temperature of the hydraulic oil is estimated more accurately in a manner reflecting the aforementioned tendencies. Alternatively, since the fuel injection amount of the internal combustion engine generally changes while showing a correlation with the intake air amount, the temperature of the hydraulic oil may be estimated using the integrated value of the fuel injection amount instead of the integrated value ΣGA of the intake air amount.
(5) As the engine speed NE is increased to ensure the hydraulic pressure supply PO, the displacement of the oil pump 21 is raised, but the fuel consumption rate slightly deteriorates. However, if, by increasing the displacement of the oil pump 21 to compensate the insufficiency of the hydraulic pressure supply PO, the variable valve timing apparatus 14 is operated properly and the valve timings are changed properly to bring about target characteristic corresponding to the engine operating state, the deteriorated fuel consumption rate due to the increased engine speed NE is corrected so the fuel consumption is conserved and the exhaust properties are prevented from deteriorating.

The above embodiment may be modified in, for example, the following forms.

In the above embodiment, the oil temperature THO is estimated based on the engine coolant temperature THW and the integrated value ΣGA of the intake air amount GA in the latest period of a predetermined length immediately before the determination. However, the oil temperature THO may be estimated based only on one of the engine coolant temperature THW or the integrated value ΣGA of the intake air amount GA. Further, since the fuel injection amount of the engine 10 generally changes while showing correlation with the intake air amount GA, the oil temperature THO may be estimated using the integrated value of the fuel injection amount, instead of the integrated value ΣGA of the intake air amount GA.

Alternatively, another correlation value of the oil temperature THO may be detected and the oil temperature THO may be estimated based on the result of detection. Also, as indicated by the double-dotted chain lines in Fig. 1, an oil temperature sensor 66 may be provided so that the oil temperature THO is detected directly by the oil temperature sensor 66.

Further, in the above embodiment, the hydraulic pressure is estimated based on the estimated oil temperature and the engine speed NE. However, instead of this, a hydraulic pressure sensor 67 may be provided as indicated by the double-dotted chain lines in Fig. 1. In this case, the hydraulic pressure supply PO provided from the oil pump 21 to the variable valve timing apparatus 14 is detected directly by the hydraulic pressure sensor 67.

In the above embodiment, even if the difference (POst - PO) between the reference hydraulic pressure POst and the hydraulic pressure supply PO is the same, the increase amount ΔNE is set to a greater value as the oil temperature THO becomes higher. In this manner, the target engine speed NEtrg is set to a greater value. That is, the transmission gear ratio is changed in such a manner that the engine speed NE becomes greater as the oil temperature THO becomes higher. In contrast, the increase amount ΔNE may be calculated based solely on the difference (POst - PO) between the reference hydraulic pressure POst and the hydraulic pressure supply PO, without referring to the oil temperature THO.

In the above embodiment, the increase amount ΔNE is set based on the difference (POst - PO) between the reference hydraulic pressure POst and the hydraulic pressure supply PO. However, instead of this, the hydraulic pressure supply PO may be used directly as a parameter in accordance with which the target engine speed is set. For example, a map that sets the increase amount ΔNE in correspondence with the hydraulic pressure supply PO may be formed in advance based on the results of experiments so that the increase amount ΔNE is set directly from the hydraulic pressure supply PO.

In the above embodiment, the transmission gear ratio is changed in such a manner that the engine speed NE increases by a greater amount as the difference (POst - PO) between the reference hydraulic pressure POst and the hydraulic pressure supply PO becomes greater. Instead of this, only determination whether to increase the engine speed NE based on comparison between the hydraulic pressure supply PO and the reference hydraulic pressure POst may be performed. In this case, the transmission gear ratio is changed to increase the engine speed NE by such an amount that the hydraulic pressure supply PO reliably exceeds the reference hydraulic pressure POst.

In the above embodiment, the variable valve timing apparatuses 14 are provided for both the camshaft at the intake side and the camshaft at the exhaust side. However, the variable valve timing apparatus 14 may be arranged only for one of the camshaft at the intake side and the camshaft at the exhaust side.

In the above embodiment, the variable valve timing apparatus 14 is described as an example of a variable valve actuation apparatus. Specifically, the variable valve timing apparatus 14 changes the valve timing to a suitable value in correspondence with the engine operating state by rotating the camshaft 13 relative to the output shaft 11 of the engine 10. However, the variable valve actuation apparatus, or the controlled object of the vehicle control device according to the present invention, is not restricted to this configuration. That is, any suitable variable valve actuation apparatus may be employed as long as the apparatus changes the valve actuation using the hydraulic pressure supply PO of the hydraulic oil provided from the engine driven oil pump 21. In other words, the apparatus may change individual parameters such as the valve closing time, the valve opening time, the valve opening duration, the maximum lift amount, or the overlapped amount of the valve opening durations of the intake valve and the exhaust valve, or a combination of these parameters such as the valve closing time and the valve opening time or the valve opening duration and the maximum lift amount. Further, the present invention may be used in a vehicle having any actuator that operates using the hydraulic pressure supply PO of the hydraulic oil provided by the oil pump 21, other than the actuator that changes the valve actuation.

## Claims

1. A vehicle comprising a vehicle control device (50) ,said vehicle having an engine-driven oil pump (21) driven by rotation of an output shaft (11) of an engine (10), a hydraulic actuator that operates based on the pressure (PO) of a hydraulic oil provided by the oil pump (21), and a continuously variable transmission (30) capable of continuously varying a transmission gear ratio, the vehicle control device (50) setting the transmission gear ratio of the continuously variable transmission (30) based on the operating state of the vehicle, wherein the actuator is a variable valve actuation apparatus that changes valve actuation of at least one of an intake valve and an exhaust valve of an internal combustion engine to target actuation that is set based on the engine operating state, the vehicle control device (50) being **characterized by**:
transmission gear ratio changing means that changes the transmission gear ratio in such a manner that the rotational speed of the output shaft (11) of the engine (10) is increased when the pressure (PO) of the hydraulic oil provided from the oil pump (21) to the actuator is less than a reference hydraulic pressure (POst), wherein
the transmission gear ratio changing means changes the transmission gear ratio in such a manner that the lower the pressure of the hydraulic oil provided to the actuator, the greater the increase in the amount of the rotational speed of the output shaft of the engine (10) and wherein
the transmission gear ratio changing means detects the temperature of the hydraulic oil or a correlation value of the temperature of the hydraulic oil and changes the transmission gear ratio based on the result of the detection in such a manner that the higher the temperature of the hydraulic oil, the greater the increase in the amount of the rotational speed of the output shaft of the engine (10).

2. The vehicle according to claim 1, wherein the transmission gear ratio changing means has estimating means that detects the temperature of the hydraulic oil or a correlation value of the temperature of the hydraulic oil and, based on the result of the detection, estimates the pressure of the hydraulic oil provided to the actuator, and wherein whether the pressure of the hydraulic oil provided to the actuator is low is determined based on the result of the estimation by the estimating means.

3. The vehicle according to claim 2, wherein the correlation value of the temperature of the hydraulic oil includes the temperature of coolant (THW) of the engine (10).

4. The vehicle according to claims 2 or 3, wherein the correlation value of the temperature of the hydraulic oil includes an integrated value of an intake air amount of the engine (10) in a predetermined period immediately before the determination.

## Patentansprüche

1. Fahrzeug, aufweisend eine Fahrzeugsteuerungsvorrichtung (50), wobei das Fahrzeug eine motorgetriebene Ölpumpe (21), die durch eine Rotation einer Ausgangswelle (11) eines Motors (10) angetrieben wird, ein hydraulisches Stellglied, das basierend auf dem Druck (PO) eines Hydrauliköls, das durch die Ölpumpe (21) bereitgestellt wird, arbeitet, und ein stufenlos schaltbares Getriebe (30) aufweist, das ein Getriebe-Übersetzungsverhältnis kontinuierlich schalten kann, wobei die Fahrzeugsteuerungsvorrichtung (50) das Getriebe-Übersetzungsverhältnis des kontinuierlich schaltbaren Getriebes (30) basierend auf dem Betriebszustand des Fahrzeugs einstellt, wobei das Stellglied eine variable Ventilbetätigungsvorrichtung ist, die eine Ventilbetätigung von zumindest einem Einlassventil und/oder einem Auslassventil eines Verbrennungsmotors auf eine Soll-Betätigung ändert, die basierend auf dem Motorbetriebszustand eingestellt ist, wobei die Fahrzeugsteuerungsvorrichtung (50) **gekennzeichnet ist durch**:
eine Getriebe-Übersetzungsverhältnis-Veränderungseinrichtung, die das Getriebe-Übersetzungsverhältnis derart verändert, dass die Drehzahl der Ausgangswelle (11) des Motors (10) erhöht wird, wenn der Druck (PO) des Hydrauliköls, das dem Stellglied von der Ölpumpe (21) zugeführt wird, geringer als ein Referenz-Hydraulikdruck (POst) ist, wobei
die Getriebe-Übersetzungsverhältnis-Veränderungseinrichtung das Getriebe-Übersetzungsverhältnis derart verändert, dass, je niedriger der Druck des dem Stellglied zugeführten Hydrauliköls ist, der Anstieg des Betrags der Drehzahl der Ausgangswelle des Motors (10) umso größer ist, und wobei
die Getriebe-Übersetzungsverhältnis-Veränderungseinrichtung die Temperatur des Hydrauliköls oder einen Korrelationswert der Temperatur des Hydrauliköls erfasst und das Getriebe-Übersetzungsverhältnis basierend auf dem Ergebnis der Erfassung derart verändert, dass, je höher die Temperatur des Hydrauliköls ist, der Anstieg des Betrags der Drehzahl der Ausgangwelle des Motors (10) umso größer ist.

2. Fahrzeug nach Anspruch 1, wobei die Getriebe-Übersetzungsverhältnis-Veränderungseinrichtung eine Schätzeinrichtung aufweist, die die Temperatur des Hydrauliköls oder einen Korrelationswert der Temperatur des Hydrauliköls erfasst und, basierend auf dem Ergebnis der Erfassung, den Druck des dem Stellglied zugeführten Hydrauliköls schätzt, und wobei basierend auf dem Ergebnis der Schätzung durch die Schätzeinrichtung bestimmt wird, ob der Druck des dem Stellglied zugeführten Hydrauliköls niedrig ist.

3. Fahrzeug nach Anspruch 2, wobei in dem Korrelationswert der Temperatur des Hydrauliköls die Temperatur eines Kühlmittels (THW) des Motors (10) enthalten ist.

4. Fahrzeug nach Anspruch 2 oder 3, wobei in dem Korrelationswert der Temperatur des Hydrauliköls ein Integralwert einer Saugluftmenge des Motors (10) in einer vorbestimmten Zeitspanne unmittelbar vor der Bestimmung enthalten ist.

## Revendications

1. Véhicule comportant un dispositif de commande (50) de véhicule, ledit véhicule ayant une pompe à huile (21) entraînée par un moteur qui est entraînée par la rotation d'un arbre de sortie (11) d'un moteur (10), un actionneur hydraulique qui fonctionne sur la base de la pression (PO) d'une huile hydraulique fournie par la pompe à huile (21), et une transmission à variation continue (30) capable de faire varier en continu un rapport de démultiplication de la boîte de vitesse, le dispositif de commande (50) de véhicule réglant le rapport de démultiplication de la boîte de vitesse de la transmission à variation continue (30) sur la base de l'état de fonctionnement du véhicule, où l'actionneur est un appareil de distribution variable de soupapes qui change la distribution des soupape d'au moins l'une d'une soupape d'admission et d'une soupape d'échappement d'un moteur à combustion interne à une distribution cible qui est basée sur l'état de fonctionnement du moteur, le dispositif de commande de véhicule (50) étant caractériser par :
un moyen de changement du rapport de démultiplication de la boîte de vitesse qui change le rapport de démultiplication de la boîte de vitesse de sorte que la vitesse de rotation de l'arbre de sortie (11) du moteur (10) augmente lorsque la pression (PO) de l'huile hydraulique fournie par la pompe à huile (21) à l'actionneur est inférieure à une pression hydraulique de référence (POst), où
le moyen de changement du rapport de démultiplication de la boîte de vitesse change le rapport de démultiplication de la boîte de vitesse de sorte que plus la pression de l'huile hydraulique fournie à l'actionneur est faible, plus la vitesse de rotation de l'arbre de sortie du moteur (10) est élevée, et où
le moyen de changement du rapport de démultiplication de la boîte de vitesse détecte la température de l'huile hydraulique ou une valeur de corrélation de la température de l'huile hydraulique et change le rapport de démultiplication de la boîte de vitesse sur la base du résultat de la détection de sorte que plus la température de l'huile hydraulique est élevée, plus la vitesse de rotation de l'arbre de sortie du moteur (10) est élevée.

2. Véhicule selon la revendication 1, dans lequel le moyen de changement du rapport de démultiplication de la boîte de vitesse dispose d'un moyen d'estimation qui détecte la température de l'huile hydraulique ou une valeur de corrélation de la température de l'huile hydraulique et, sur la base du résultat de la détection, estime la pression de l'huile hydraulique fournie à l'actionneur, et dans lequel, on détermine que la pression de l'huile hydraulique fournie à l'actionneur est faible, sur la base du résultat de l'estimation par le moyen d'estimation.

3. Véhicule selon la revendication 2, dans laquelle la valeur de corrélation de la température de l'huile hydraulique comprend la température du liquide de refroidissement (THW) du moteur (10).

4. Véhicule selon les revendications 2 ou 3, dans lequel la valeur de corrélation de la température de l'huile hydraulique comprend une valeur intégrée de la quantité d'air d'admission du moteur (10) dans une période prédéterminée immédiatement avant l'étape de détermination.
